# EUROPEAN PATENT APPLICATION

(11) **EP 4 692 559 A1**
(43) Date of publication of application: **11.02.2026**
(21) Application number: 24778062.0
(22) Date of filing: 27.03.2024
(51) Int. Cl.: F04D 13/06, F04D 29/42, H02K 5/04

(54) **ELECTRIC PUMP**

(30) Priority: 28.03.2023 CN 202310333278; 28.03.2023 CN 202310348826
(71) Applicant: ZHEJIANG SANHUA AUTOMOTIVE COMPONENTS CO., LTD., Hangzhou, Zhejiang 310018 (CN)
(72) Inventor: ZHANG, Jun, Hangzhou, Zhejiang 310018 (CN); HU, Jundi, Hangzhou, Zhejiang 310018 (CN); YIN, Bingjiu, Hangzhou, Zhejiang 310018 (CN)
(74) Representative: Maikowski & Ninnemann Patentanwälte Partnerschaft mbB
(86) International application number: PCT/CN2024/084072
(87) International publication number: WO 2024/199276

(57) **Abstract**

An electric pump (100), comprising a stator winding (131), a housing (134), and a pump shaft (133). The housing (134) comprises a first housing (1341) and a second housing (1342); at least part of the first housing (1341) is formed by injection molding with the stator winding (131) as an insert; a first assembly (136) is defined, and the first assembly (136) comprises the first housing (1341) and the stator winding (131); at least part of the second housing (1342) is formed by injection molding with the first assembly (136) and the pump shaft (133) as inserts; the first housing (1341) comprises a first parting surface (A); the second housing (1342) comprises a second parting surface (B); and the first parting surface (A) and the second parting surface (B) are coplanar. By means of the structure, the coaxiality tolerance of the pump shaft and the stator winding can be reduced.

## Description

The present application claims the priority to Chinese Patent Application No. 202310333278.X, titled "ELECTRIC PUMP", filed with the China National Intellectual Property Administration on March 28, 2023, and the priority to Chinese Patent Application No. 202310348826.6, titled "ELECTRIC PUMP", filed with the China National Intellectual Property Administration on March 28, 2023, the entire disclosures of which are incorporated herein by reference.

### FIELD

The present application relates to a fluid pump, and in particular to an electric pump.

### BACKGROUND

An electric pump includes a stator winding, a pump shaft, and a housing. The housing is a molded part, which is formed through at least two times of injection molding with the stator winding and the pump shaft being inserts. During these multiple times of injection molding, the stator winding and the pump shaft as inserts need to be positioned in various molding stages. Thus, how to reduce the concentricity tolerance between the pump shaft and the stator winding is a technical challenge that needs to be addressed by those skilled in the art.

### SUMMARY

An object of the present application is to provide an electric pump that facilitates reducing the concentricity tolerance between a pump shaft and a stator winding.

In order to achieve the above object, a following technical solution is provided according to an embodiment of the present application. An electric pump includes a stator winding, a housing, and a pump shaft. The housing includes a first housing and a second housing. At least part of the first housing is formed by injection molding with the stator winding being an insert. A first assembly is defined, which includes the first housing and the stator winding. At least part of the second housing is formed by injection molding with the first assembly and the pump shaft being inserts. The first housing has a first parting surface, and the second housing has a second parting surface, with the first parting surface and the second parting surface being coplanar.

In an embodiment of the present application, parting surfaces of at least part the first housing formed with the stator winding being an insert and at least part of the second housing formed with the first assembly and the pump shaft being inserts are coplanar. This allows the first assembly to proceed to next molding step without demolding from a part of the injection mold, thereby minimizing positioning errors caused by repeated loading into the first assembly in the injection mold, and facilitates reducing the concentricity tolerance between the pump shaft and the stator winding.

### BRIEF DESCRIPTION OF THE DRAWINGS

FIG. 1 is a schematic perspective structural view of an electric pump provided according to a first embodiment of the present application;
FIG. 2 is a schematic exploded structural view of the electric pump in FIG. 1;
FIG. 3 is a schematic cross-sectional structural view of the electric pump in FIG. 1 taken along X-X;
FIG. 4 is a schematic perspective structural view showing an embodiment of a stator winding of the electric pump in FIG. 1;
FIG. 5 is a schematic perspective structural view showing an embodiment of a stator assembly of the electric pump in FIG. 1;
FIG. 6 is a schematic exploded structural view of the stator assembly in FIG. 5;
FIG. 7 is a schematic cross-sectional structural view of the stator assembly in FIG. 5 taken along Y-Y;
FIG. 8 is a schematic perspective structural view of a first assembly in a direction;
FIG. 9 is a schematic cross-sectional structural view of the first assembly in FIG. 8 taken along Z-Z;
FIG. 10 is a schematic perspective structural view showing a specific embodiment of a second housing in FIG. 5;
FIG. 11 is a schematic cross-sectional structural view of the second housing in FIG. 10 in a direction;
FIG. 12 is a schematic perspective structural view showing a connection plate assembly being assembled onto the stator winding in FIG. 5;
FIG. 13 is a schematic perspective structural view showing an embodiment of the connection plate assembly (with a plug-in member removed) in FIG. 12;
FIG. 14 is a schematic cross-sectional structural view showing another embodiment of the connection plate assembly in FIG. 12;
FIG. 15 is a schematic perspective structural view showing a main body portion being embedded within a limiting member in FIG. 14;
FIG. 16 is a schematic perspective structural view showing an embodiment where part of a pin portion is embedded within the plug-in member in FIG. 14;
FIG. 17 is a schematic perspective structural view showing another embodiment where part of the pin portion is embedded within the plug-in member in FIG. 14;
FIG. 18 is a schematic cross-sectional structural view showing an embodiment where the stator winding and the connection plate assembly are placed as inserts within a first tooling;
FIG. 19 is a schematic cross-sectional structural view showing an embodiment after part of mold of the first tooling is closed with a second tooling.

### Reference numerals in the drawings are as follows:

100 electric pump;
11 pump cover,
12 rotating assembly, 121 impeller assembly, 122 rotor assembly;
13 stator assembly, 131 stator winding, 1311 stator core, 1311a first end portion, 1311b second end portion, 1311c positioning portion, 1312 insulating frame, 1313 winding;
132 connection plate assembly, 1321 limiting member, 1322 conductive member, 1322a main body portion, 1322b pin portion, 1322c electrical connection portion, 1322d base portion, 1322e external power supply connection portion, 1323 plug-in member, 1323a plug hole, 1323b first hole portion, 1323c second hole portion, 1323d plate portion, 1323e cutout portion, 1324 pressure relief hole;
133 pump shaft, 1331 fixed portion, 1332 rotating portion;
134 housing, 1341 first housing, 1341a first main body portion, 1341b first edge portion, 1341c first end face, 1341d second end face, 1342 second housing, 1342a radially extending section, 1342b cylindrical section, 1342c flange portion;
136 first assembly, 1362 first cavity, 1362a bottom portion, 1362b side portion;
141 rotor cavity, 1411 rotor cavity bottom portion, 1412 rotor cavity side portion, 15 impeller cavity, 20 pump chamber;
101/101' first reference plane, A first parting surface, B second parting surface, C first mold, D second mold.

### DETAILED DESCRIPTION OF THE EMBODIMENTS

The present application will be further explained below in conjunction with the accompanying drawings and specific embodiments.

Specific embodiments of the present application are described in detail hereinafter in conjunction with the drawings. First of all, it should be noted that the location terms, such as upper, lower, left, right, front, rear, inside, outside, top and bottom, mentioned or possibly mentioned in this specification are relative concepts defined based on those constructs shown in the corresponding drawings, and therefore may vary with locations or states of use. Therefore, these and other location terms should not be construed as restrictive terms.

An electric pump in following embodiments can provide flowing power for a working medium of a vehicle thermal management system, and the working medium is 50% aqueous solution of ethylene glycol or clean water. Certainly, the working medium may also be other substances.

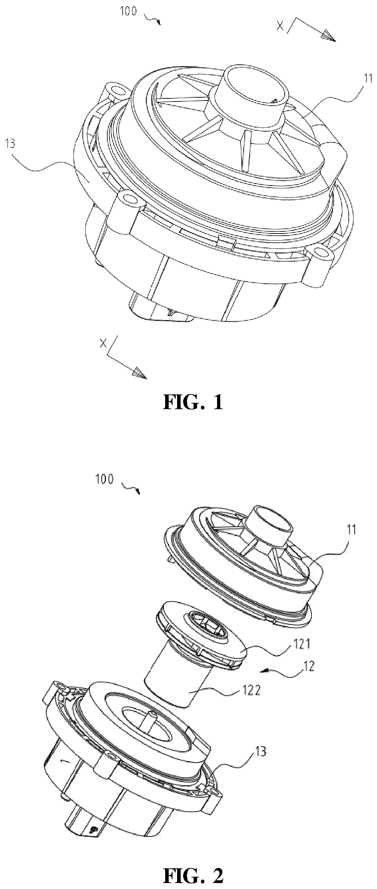

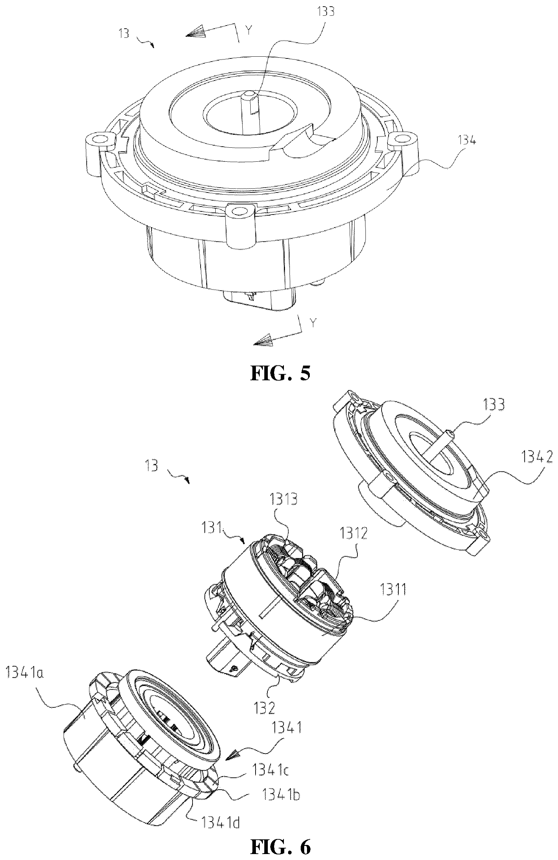

Referring to FIGS. 1 to 8, an electric pump 100 is provided according to the present application, including a pump cover 11, a rotating assembly 12, and a stator assembly 13. The stator assembly 13 includes a connection plate assembly 132, a stator winding 131, a pump shaft 133, and a housing 134. The pump cover 11 is sealingly fixed to the stator assembly 13. It should be noted that "sealingly fixed" herein refers to preventing the working medium from leaking to the exterior of the electric pump during its operation. The pump shaft 133 is fixed to the housing 134 by injection molding. It can be understood that part of the pump shaft is embedded within the housing 134. The electric pump 100 has a pump chamber 20, in which the rotating assembly 12 is located. The pump chamber 20 includes a rotor cavity 141 and an impeller cavity 15, which are communicated with each other. The rotating assembly 12 includes a rotor assembly 122 and an impeller assembly 121, and the rotor assembly 122 includes permanent magnets. At least part of the rotor assembly 122 is positioned within the rotor cavity 141, and the impeller assembly 121 is located within the impeller cavity 15. The pump chamber 20 allows working medium to flow through. In a specific embodiment, the other end of the pump shaft 133 is at least partially positioned within the rotor cavity 141, and at least part of the rotating assembly 12 is mounted onto an outer periphery of the pump shaft 133, with the rotating assembly 12 being drivingly connected to the pump shaft 133. Alternatively, in other embodiments, the rotating assembly 12 is fixedly connected to the pump shaft 133, with the pump shaft 133 rotating along with the rotor assembly 122. The connection plate assembly 132 includes a limiting member 1321 and a conductive member 1322. The limiting member 1321 is connected to the stator winding 131 with limitation or fixedly connected to the stator winding 131, and the conductive member 1322 is connected to and limited by the limiting member 1321 or fixedly connected to the limiting member 1321. Specifically, part of the conductive member 1322 is embedded within the limiting member 1321, which is an injection-molded member. The conductive member 1322 includes a first connection end and a second connection end, with the first connection end being electrically connected to the stator winding 131 and the second connection end serving as a pin end for electrical connection to an external power supply of the electric pump 100. Alternatively, in other implementations, the electric pump 100 may not include a pump cover 11, with the pump cover 11 being integrated into an external structure. This arrangement facilitates the integrated design of the electric pump 100, making the structure of the electric pump 100 more compact and further contributing to miniaturization and lightweighting. During the operation of the electric pump 100, the excitation magnetic field generated by the stator winding 131 is controlled by regulating the current flowing through it, causing the rotating assembly 12 to rotate around the pump shaft 133 under influence of the excitation magnetic field.

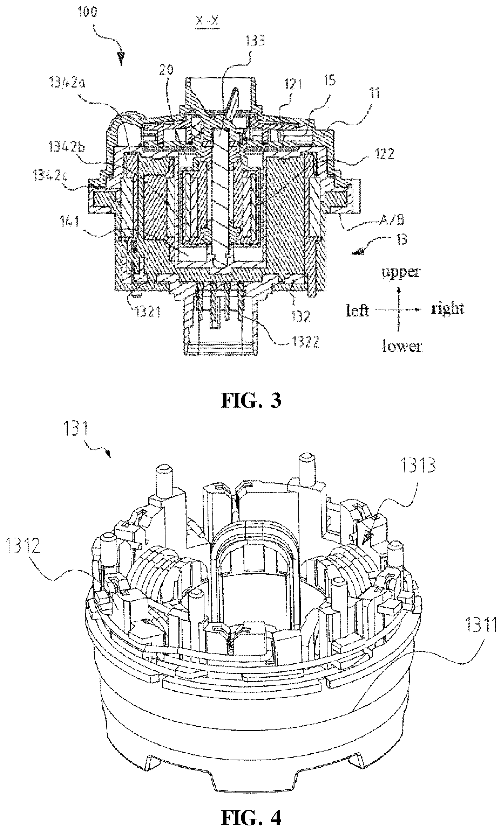

Referring to FIG. 4, the stator winding 131 includes a stator core 1311, an insulating frame 1312, and multiple windings 1313. At least three windings 1313 are provided. The insulating frame 1312 envelops at least part of the surface of the stator core 1311 and serves to electrically isolate the windings 1313 from the stator core 1311. The insulating frame 1312 and the stator core 1311 may be integrated as a single structural component. Specifically, in an implementation, the insulating frame 1312 is formed by injection molding with the stator core 1311 serving as an insert. Alternatively, in other embodiments, the insulating frame 1312 and the stator core 1311 may be separately provided, which means the insulating frame 1312 and the stator core 1311 are manufactured as two separate components and then assembled together through limiting-connection or fixed connection. In the present embodiment, the insulating frame 1312 is formed by injection molding with the stator core 1311 being an insert, which means the stator core 1311 and the insulating frame 1312 are an integrated structure. The windings 1313 are wound around the insulating frame 1312. In a specific embodiment, nine windings 1313 are provided. However, in other implementations, different number of windings 1313 may be provided, such as three, six, twelve, or the like.

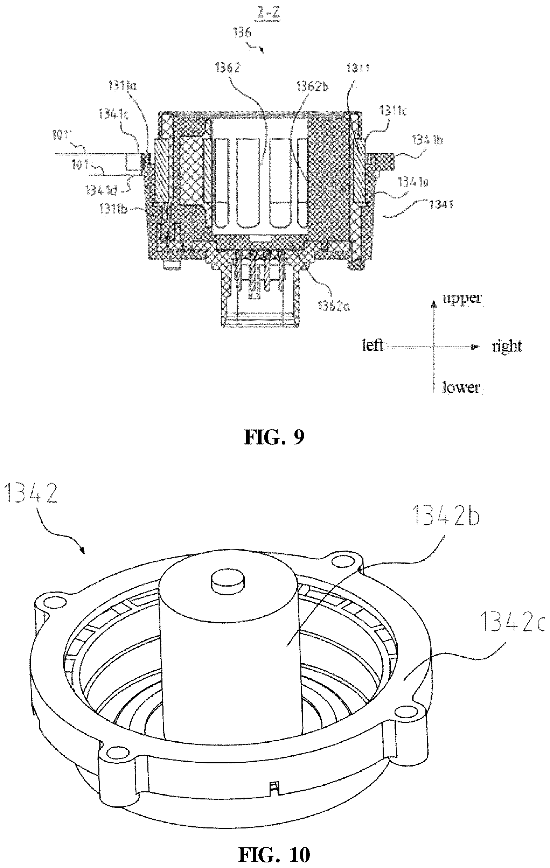

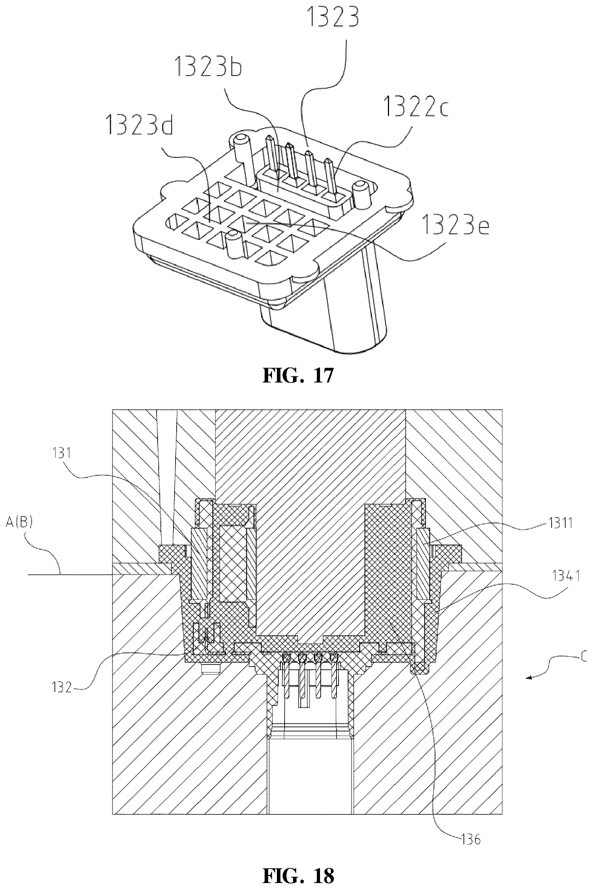

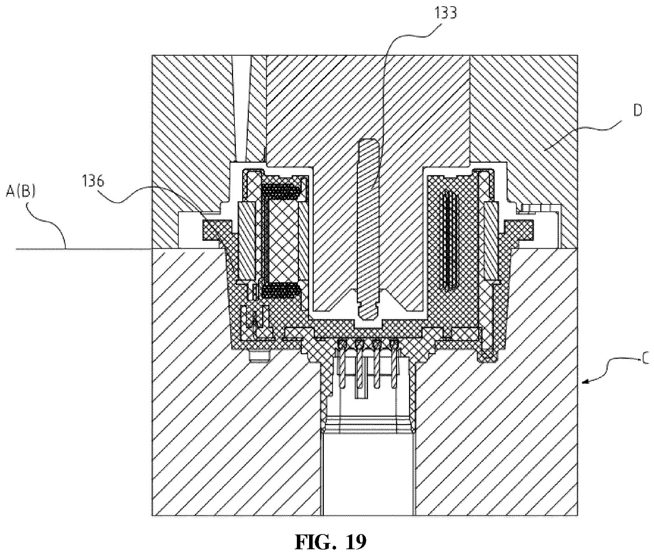

Referring to FIGS. 1 to 13, the housing 134 includes a first housing 1341 and a second housing 1342. The first housing 1341 is formed by injection molding at least with the stator winding 131 serving as an insert. Specifically, in an implementation, at least part of the first housing 1341 is formed by injection molding with the stator winding 131 being an insert. Specifically, the first housing 1341 is formed by injection molding with the stator winding 131 being an insert, alternatively, in other embodiments, the first housing 1341 may be formed by injection molding with both the connection plate assembly 132 and the stator winding 131 serving as inserts. The specific method of forming the first housing 1341 by injection molding with the connection plate assembly 132 and the stator winding 131 being inserts will be described in detail later and is not elaborated upon here. A first assembly 136 is defined, which includes the first housing 1341 and the stator winding 131. At least part of the second housing 1342 is formed by injection molding with the first assembly 136 and the pump shaft 133 serving as inserts. Specifically, the second housing 1342 is formed by injection molding with the first assembly 136 and the pump shaft 133 being inserts. The first housing 1341 and the second housing 1342 are formed by injection molding and fixed together. The first housing 1341 includes a first parting surface A, and the second housing 1342 includes a second parting surface B, with the first parting surface A and the second parting surface B are coplanar. For the sake of subsequent description, the injection molding with the stator winding 131 and the connection plate assembly 132 being inserts is defined as a first-time injection molding, and the injection molding with the first assembly 136 and the pump shaft 133 being inserts is defined as a second-time injection molding. In this manner, the first assembly 136, formed with at least the stator winding 131 being an insert, remains in part of the injection mold without being demolded from the next injection molding step. In the subsequent injection molding step, at least the first assembly 136 and the pump shaft 133 are used as inserts for injection molding. Since the first parting surface A and the second parting surface B are coplanar, the first assembly 136, formed with at least the stator winding 131 being an insert, can remain in part of the injection mold without being demolded, thereby reducing the positioning error caused by repeated loading of the first assembly 136 being an insert in the injection mold. This contributes to improving the coaxial accuracy between the pump shaft 133 and the stator winding 131. For ease of description, referring to FIGS. 18 and 19, the injection mold is defined to include a first mold C. The mold used in the first-time injection molding is the first mold C. After the first-time injection molding is completed, part of the first mold C is detached, leaving the first assembly 136 in the first mold C. During the second-time injection molding, part of the first mold C is used in conjunction with a second mold D to complete the second-time injection molding. In this way, during the second-time injection molding, the positioning reference for at least the pump shaft 133 being an insert remains the same as that in the first-time injection molding, reducing the positioning error caused by repeated loading of the first assembly 136 being an insert in the injection mold. This further reduces the tolerance of the coaxiality between the pump shaft 133 and the stator core 1311.

Referring to FIGS. 1 to 9, in an implementation, along an axial direction of the electric pump 100, the connection plate assembly 132 is connected to the stator winding 131 with limitation or fixedly connected to the stator winding 131 and the connection plate assembly 132 is electrically connected to the windings 1313 of the stator winding 131. At least part of the first housing 1341 is formed by injection molding with the stator winding 131 and the connection plate assembly 132 serving as inserts, with at least part of the connection plate assembly 132 and part of the stator winding 131 being located within the first housing 1341. In this manner, firstly, it facilitates the miniaturization of the electric pump 100 in a radial direction, and secondly, injection molding with the connection plate assembly 132 and the stator winding 131 being inserts simplifies the assembly process of the electric pump 100.

Specifically, referring to FIGS. 4 to 9, in an implementation, the first assembly 136 has a first cavity 1362, with a corresponding wall of the first cavity 1362 including a bottom portion 1362a and a side portion 1362b. The bottom portion 1362a is located at one end of the side portion 1362b. The second housing 1342 includes a rotor cavity bottom portion 1411 and a rotor cavity side portion 1412, which are connected in a hermetically sealing way through injection molding. The rotor cavity bottom portion 1411 is located above the bottom portion 1362a of the first cavity 1362 and is in contact with the bottom portion 1362a of the first cavity 1362. A corresponding wall of the rotor cavity 141 include the rotor cavity bottom portion 1411 and the rotor cavity side portion 1412. In the radial direction of the electric pump 100, the rotor cavity bottom portion 1411 covers the bottom portion 1362a of the first cavity 1362, and the rotor cavity side portion 1412 is located radially inward of the side portion 1362b of the first cavity 1362 and is in contact with it. Along the peripheral direction of the side portion 1362b of the first cavity 1362, the rotor cavity side portion 1412 covers the side portion 1362b of the first cavity 1362. In this manner, during the operation of the electric pump, the working medium can flow through the rotor cavity 141. During the second-time injection molding, the rotor cavity bottom portion 1411 and the rotor cavity side portion 1412 are simultaneously formed. The rotor cavity bottom portion 1411 and the rotor cavity side portion 1412 are fixed together in a hermetically sealing way. Compared to forming the rotor cavity bottom portion 1411 and the rotor cavity side portion 1412 in different injection molding steps, this reduces joint surfaces needed between the rotor cavity bottom portion 1411 and the rotor cavity side portion 1412, further minimizing the risk of leakage of the working medium within the rotor cavity 141 through the joint surfaces between the rotor cavity bottom portion 1411 and the rotor cavity side portion 1412 during the operation of the electric pump, and contributes to prolonging the service life of the electric pump.

Referring to FIGS. 1 to 9, in an implementation, the pump shaft 133 is fixed to the second housing 1342 by injection molding. To mitigate the risk of leakage of the working medium within the rotor cavity 141 through the joint surfaces between the pump shaft 133 and the second housing 1342, the pump shaft 133 includes a fixed portion 1331 and a rotating portion 1332. The fixed portion 1331 is fixed to the rotor cavity bottom portion 1411 by injection molding, and the fixed portion 1331 is embedded within the rotor cavity bottom portion 1411. At least part of the rotating portion 1332 is located within the rotor cavity 141. An end of the fixed portion 1331 is positioned within the rotor cavity bottom portion 1411, with part of the rotor cavity bottom portion 1411 encapsulating the end of the fixed portion 1331. In this manner, the end of the pump shaft 133 is encapsulated within the rotor cavity bottom portion 1411. It can be understood that the end of the pump shaft 133 does not protrude from a lower end face of the rotor cavity bottom portion 1411. This arrangement helps to reduce the risk of leakage through the joint surfaces between the pump shaft 133 and the second housing 1342.

In an implementation, referring to FIGS. 1 to 9, the second housing 1342 further includes a radially extending section 1342a, which is connected to one end of the rotor cavity side portion 1412 in a hermetically sealing way. Along the axial direction of the electric pump, the radially extending section 1342a is positioned away from the bottom portion 1362a relative to the rotor cavity bottom portion 1411. The radially extending section 1342a is fixed to the end of the first assembly 136 by injection molding. The electric pump 100 includes an impeller cavity 15 and a rotor cavity 141, with the rotor cavity 141 being in communication with the impeller cavity 15. The wall corresponding to the rotor cavity 141 includes the rotor cavity bottom portion 1411 and the rotor cavity side portion 1412, while the wall corresponding to the impeller cavity 15 includes at least part of the radially extending section 1342a. In this manner, during the operation of the electric pump, both the rotor cavity 141 and the impeller cavity 15 contain working medium. During the second-time injection molding, wall surfaces corresponding to the rotor cavity 141 and the impeller cavity 15 are simultaneously formed. Compared to the corresponding wall surfaces of the radially extending section 1342a and the rotor cavity, it can be understood that forming the rotor cavity bottom portion 1411 and the rotor cavity side portion 1412 in different injection molding steps can reduce direct joint surfaces of the radially extending section 1342a and the rotor cavity side portion 1412, thereby minimizing the risk of leakage of the working medium within the rotor cavity 141 and the impeller cavity 15 through the joint surfaces.

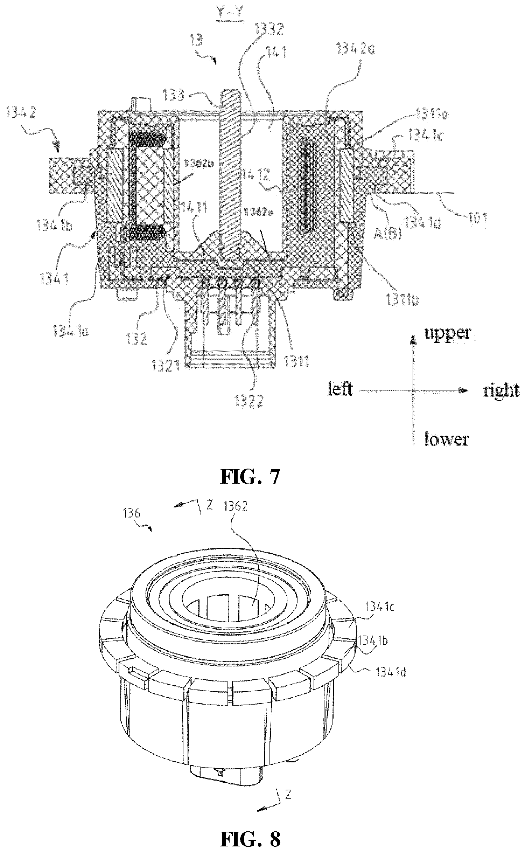

In an implementation, referring to FIGS. 7 to 9, an inner sidewall surface of the side portion 1362b may only include the inner sidewall surface of the first housing 1341. If, during the first-time injection molding, the inner sidewall surface of the side portion 1362b covers the inner sidewall surface of the stator core, in order to ensure a magnetic air gap between the stator core and the rotor assembly to be relatively small, a thickness of the rotor cavity side portion 1412 would become thinner when it is positioned on the inner sidewall surface of the side portion 1362b during the second-time injection molding. To increase the thickness and improve the strength of the rotor cavity side portion 1412, in an implementation, the inner sidewall surface of the side portion 1362b includes both the inner sidewall surface of the stator core 1311 and the inner sidewall surface of the first housing 1341. Specifically, the first assembly 136 includes a positioning portion 1311c, which consists of a supporting portion and a limiting portion. The supporting portion is located at the end of the stator core 1311, and the limiting portion is positioned on the outer peripheral side of the stator core 1311. During the first-time injection molding, the supporting portion and the limiting portion cooperate to serve as the positioning reference for injection molding. The first housing 1341 encapsulates all parts in a first main body portion 1341a except for the positioning portion 1311c and the inner sidewall surface of the stator core 1311. In other words, the first housing 1341 isolates all parts except for the positioning portion 1311c and the inner sidewall surface of the stator core 1311 from the air. In this manner, the strength of the rotor cavity side portion 1412 is improved while a small magnetic air gap between the stator core and the rotor assembly is ensured.

In an implementation, with reference to FIGS. 3 to 9, the first housing 1341 includes a first main body portion 1341a and a first edge portion 1341b. The first main body portion 1341a is formed by injection molding with the stator winding 131 being an insert, with at least part of the stator winding 131 located within the first main body portion 1341a. The stator winding 131 includes a stator core 1311, which further includes a first end portion 1311a and a second end portion 1311b. The first edge portion 1341b is disposed on a radially outer side of the first main body portion 1341a. It should be noted that "radially outer side" here and in the following descriptions refers to the direction perpendicular to the axial direction of the electric pump and away from an axis of the electric pump. The first edge portion 1341b is adjacent to the first end portion 1311a. Specifically, the first edge portion 1341b extends around a circumference of the first main body portion 1341a. Alternatively, the first edge portion 1341b can be formed during the first-time injection molding or the second-time injection molding. In this embodiment, as mentioned above, the first edge portion 1341b is formed during the first-time injection molding. Along a direction parallel to the axial direction of the electric pump 100, the first edge portion 1341b is positioned between the first end portion 1311a and the second end portion 1311b. Specifically, the first end portion 1311a is away from the connection plate assembly 132 compared to the second end portion 1311b, and the first edge portion 1341b is provided at one end of the first main body portion 1341a. Specifically, the winding 1313 is located in the first main body portion 1341a, which can be understood as the first main body portion 1341a isolating the winding 1313 from the air. Part of the stator core 1311 and at least part of the insulating frame 1312 are located in the first main body portion 1341a, meaning the first main body portion 1341a isolates part of the stator core 1311 and at least part of the insulating frame 1312 from the air. By such arrangement, firstly, the first edge portion 1341b can serve as a support for connecting the electric pump 100 to external structures. This structural arrangement facilitates using shorter fasteners when connecting to external structures, which not only ensures the connection strength between the electric pump and the external structure but also helps reduce production costs.

In an implementation, with reference to FIGS. 3 to 9, the first edge portion 1341b includes a first end surface 1341c and a second end surface 1341d. Along the direction parallel to the electric pump 100, the first end surface 1341c is closer to the first end portion 1311a than the second end surface 1341d. It can be understood that the first end surface 1341c is closer to the positioning portion 1311c relative to the second end surface 1341d. A plane where the first parting surface A or the second parting surface B is located is defined as a first reference plane 101, and the first reference plane 101 is coplanar with a plane where the second end surface 1341d is located. In this way, the coplanar arrangement of the first reference plane 101 and the second end surface 1341d lays a foundation for various possible structures of the second housing 1342. It can be understood that with the first reference plane 101 set in this position, the structure of the second housing 1342 can partially encase at least part of the first edge portion 1341b, which is beneficial for increasing the connecting strength between the first housing 1341 and the second housing 1342.

In another implementation, with reference to FIGS. 3 to 9, the first edge portion 1341b includes a first end surface 1341c and a second end surface 1341d. Along the axial direction of the electric pump 100, the second end surface 1341d is closer to the second end portion 1311b than the first end surface 1341c. The plane where the first parting surface A or the second parting surface B is located is defined as a first reference plane 101', the first reference plane 101' is either located between the plane where the second end surface 1341d is located and the plane where the first end surface 1341c is located, or coplanar with the plane where the first end surface 1341c is located. In this case, a foundation is laid for various possible structures of the second housing 1342. It can be understood that different choices of the first reference plane 101'/101 can lead to adaptive changes in the design of the structure of the second housing 1342, providing a basis for various adaptive structures of the second housing 1342.

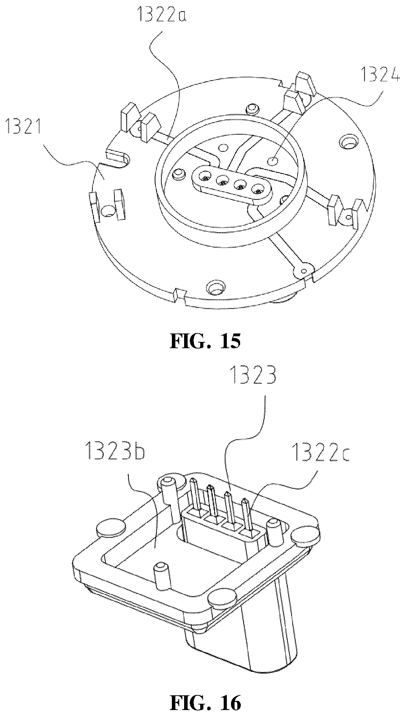

To further reduce the production cost of the electric pump 100, with reference to FIGS. 1 to 19, the first housing 1341 and the second housing 1342 may be made of different injection molding materials. Specifically, the material of the first housing 1341 has a lower hydrolysis resistance than that of phenylenesulfide (PPS), while the material of the second housing 1342 has a hydrolysis resistance equal to or greater than that of PPS. Specifically, the material of the first housing 1341 includes but is not limited to thermoplastic polyester materials. Specifically, the material of the first housing 1341 includes polybutylene terephthalate (PBT). The material of the second housing 1342 includes but is not limited to thermoplastic resin materials. Specifically, the material of the second housing 1342 may be selected to be hydrolysis-resistant, temperature-resistant, weldable, with low dimensional shrinkage, and low moisture absorption. Specifically, the second housing 1342 may be made of phenylenesulfide (PPS). In this case, the production cost of the electric pump is reduced while service life thereof is improved.

Referring to FIGS. 1 to 19, the second housing 1342 includes a first sealing portion, and the pump cover 11 includes a second sealing portion. The first sealing portion and the second sealing portion are hermetically fixed together through methods such as welding or bonding. The welding methods may include laser welding, friction welding, and ultrasonic welding, which will not be elaborated on further here.

Referring to FIGS. 3 to 11, in an implementation, at least part of the first housing 1341 is formed by injection molding with the stator winding 131 being an insert. Alternatively, it can be understood that the first housing 1341 is at least formed by injection molding with the stator winding 131 being an insert. A first assembly 136 is defined. The first assembly 136 includes the first housing 1341 and the stator winding 131. At least part of the second housing 1342 is formed by injection molding with the first assembly 136 and the pump shaft 133 as inserts. It can be understood that the second housing 1342 is at least formed by injection molding with the first assembly 136 and the pump shaft 133 being inserts. The first housing 1341 and the second housing 1342 are fixed together through injection molding. The second housing 1342 includes a cylindrical portion 1342b and a radially extending section 1342a. Specifically, the cylindrical portion 1342b includes a rotor cavity bottom portion 1411 and a rotor cavity side portion 1412. The corresponding wall of the rotor cavity 141 includes the rotor cavity bottom portion 1411 and the rotor cavity side portion 1412. Along the radial direction of the electric pump 100, the radially extending section 1342a is disposed radially outward of the cylindrical portion 1342b. Specifically, the corresponding wall of the rotor cavity 141 further includes the radially extending section 1342a. The electric pump 100 has a pump chamber 20. When the electric pump 100 is in operation, working medium can flow through the pump chamber 20. The corresponding wall of the pump chamber 20 includes the cylindrical portion 1342b and the radially extending section 1342a. The materials of the first housing 1341 and the second housing 1342 are different. This offers following advantages. Firstly, during the operation of the electric pump, it facilitates reducing the requirements for the material performance grade, such as the hydrolysis resistance grade, of the first housing 1341, thereby helping to lower the production cost of the electric pump. Secondly, during the operation of the electric pump, the rotor cavity 141 and the impeller cavity 15 contain the working medium. During the second-time injection molding, the walls corresponding to the rotor cavity 141 and the impeller cavity 15 are formed simultaneously. Compared to the corresponding walls of the radially extending section 1342a and the rotor cavity, it can be understood that forming the rotor cavity bottom portion 1411 and the rotor cavity side portion 1412 in different injection molding steps can reduce the direct joint surfaces between the radially extending section 1342a and the rotor cavity side portion 1412, thereby minimizing the risk of leakage of the working medium within the rotor cavity 141 and the impeller cavity 15 through the joint surfaces.

Specifically, in an implementation, referring to FIGS. 3 to 11, the first assembly 136 has a first cavity 1362. The corresponding wall of the first cavity 1362 includes a bottom portion 1362a and a side portion 1362b. The bottom portion 1362a is disposed at one end of the side portion 1362b. The second housing 1342 includes the rotor cavity bottom portion 1411 and the rotor cavity side portion 1412. The rotor cavity bottom portion 1411 and the rotor cavity side portion 1412 are hermetically connected through injection molding. The rotor cavity bottom portion 1411 is located above and in contact with the bottom portion 1362a of the first cavity 1362. The corresponding wall of the rotor cavity 141 includes the rotor cavity bottom portion 1411 and the rotor cavity side portion 1412. Along the radial direction of the electric pump 100, the rotor cavity bottom portion 1411 covers the bottom portion 1362a of the first cavity 1362. The rotor cavity side portion 1412 is located radially inward of the side portion 1362b of the first cavity 1362 and is in contact with the side portion 1362b of the first cavity 1362. Along the circumferential direction of the side portion 1362b of the first cavity 1362, the rotor cavity side portion 1412 covers the side portion 1362b of the first cavity 1362. Through this way, the housing is formed through at least two times of injection molding, which helps to improve the appearance quality of the wall corresponding to the rotor cavity, such as the cylindricity of the wall corresponding to the rotor cavity. This, in turn, helps to improve the efficiency of the electric pump.

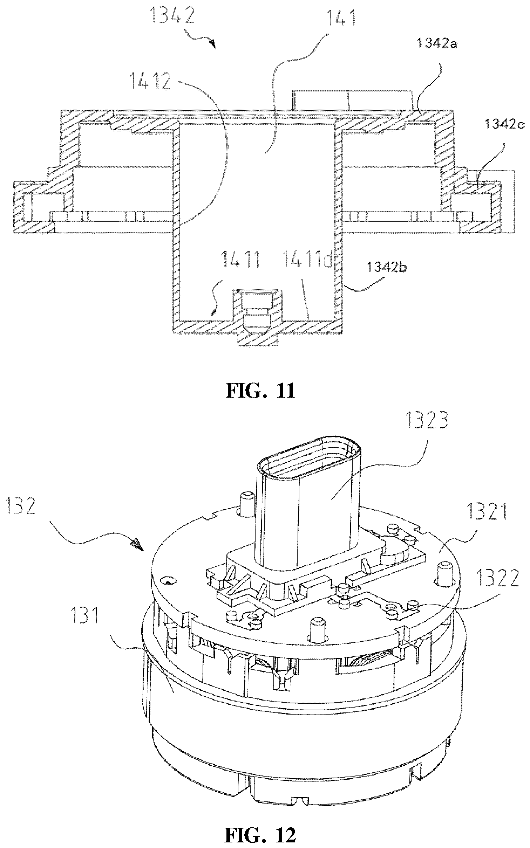

In an implementation, referring to FIGS. 1 to 11, the second housing 1342 includes a first sealing portion, and the pump cover 11 includes a second sealing portion. The first sealing portion and the second sealing portion are hermetically fixed together through manners such as welding or bonding, with welding methods including laser welding, friction welding, and ultrasonic welding. To further reduce the production cost of the electric pump 100, in an implementation, referring to FIG. 12, the second housing 1342 further includes a flange portion 1342c. Along the radial direction outward of the electric pump 100, the flange portion 1342c is disposed radially outside of the radially extending section 1342a. The electric pump 100 includes a pump cover 11. The part of the pump cover 11 used for welding is located above the flange portion 1342c, and the pump cover 11 is hermetically fixedly connected to the flange portion 1342c through welding. In this way, the number of the fixing components for connecting the pump cover 11 to the stator assembly 13 and the number of the sealing components at the connection between the pump cover 11 and the stator assembly 13 are reduced, thereby helping to lower the production cost of the electric pump 100.

The following provides a detailed description of the connection plate assembly.

Referring to FIGS. 1 to 3 and FIGS. 12 to 19, in an implementation, along the axial direction of the electric pump 100, the connection plate assembly 132 is connected to and limited by the end of the stator winding 131 or fixedly connected to the end of the stator winding 131 and is electrically connected to the windings 1313 of the stator winding 131. The first housing 1341 is at least formed by injection molding with the stator winding 131 and the connection plate assembly 132 being inserts. At least part of the connection plate assembly 132 and part of the stator winding 131 are located in the first housing 1341. This offers following advantages. Firstly, a more compact radial design of the electric pump 100 is achieved. Secondly, by injection molding the connection plate assembly 132 and the stator winding 131 as inserts, the assembly process of the electric pump 100 is simplified. For the sake of subsequent descriptions, the injection molding process with the stator winding 131 and the connection plate assembly 132 being inserts is defined as the first-time injection molding, and the injection molding process with the first assembly 136 and the pump shaft 133 being inserts is defined as the second-time injection molding.

In an implementation, referring to FIGS. 12 to 17, the connection plate assembly 132 includes a limiting member 1321, a conductive member 1322, and a plug-in member 1323. Specifically, the limiting member 1321 and the plug-in member 1323 are injection molding parts, while the conductive member 1322 is a metallic part. The conductive member 1322 includes a body portion 1322a and a pin portion 1322b, which are fixedly connected or connected with limitation. Specifically, the body portion 1322a and the pin portion 1322b may be an integrated structural component. Alternatively, they may be separate structural components that are fixedly connected through welding or achieve electrical connection through plugging. The electric pump 100 includes a pin (not shown in the figures). The pin and the conductive member 1322 may be an integral structure or separate structures. One end of the pin is electrically connected to the wiring terminals of the stator winding 131, and the other end of the pin is fixedly connected to the body portion 1322a. The plug-in member 1323 is connected to and limited by the limiting member 1321 or fixedly connected to the limiting member 1321. The plug-in member 1323 has a plug hole 1323a. At least part of the body portion 1322a is embedded in the limiting member 1321, and at least part of the pin portion 1322b is located within the plug hole 1323a. In this way, the plug-in member 1323 can be pre-molded. In other words, during the first-time injection molding, the plug-in member 1323 serves as an insert to form the first housing 1341 by injection molding. This helps to simplify the mold structure used during the first-time injection molding, laying a foundation for reducing the production cost of the electric pump 100.

In an implementation, referring to FIGS.1, 12 to 17, the body portion 1322a and the pin portion 1322b are in a separate structure. The plug-in member 1323 is connected to and limited by the limiting member 1321. The pin portion 1322b includes an electrical connection portion 1322c, a base portion 1322d, and an external power supply connection portion 1322e. The electrical connection portion 1322c is connected to and limited by the body portion 1322a, the base portion 1322d is formed by injection molding and fixed with the plug-in member 1323, and the external power supply connection portion 1322e is used for connecting to an external power source. At least part of the external power supply connection portion 1322e is located within the plug hole 1323a. In this way, the assembly formed by at least partially injection molding and fixing the pin portion 1322b with the plug-in member 1323 is plugged into the conductive member 1322 embedded in the limiting member 1321, so as to achieve electrical connection. This helps to enhance the adaptability of the connection plate assembly 132. In other words, the assembly formed by at least partially injection molding and fixing the pin portion 1322b with the plug-in member 1323 can be applied to different models of electric pumps, thereby helping to reduce the production cost of the electric pumps.

To minimize deformation of the connection plate assembly 132 during injection molding, referring to FIGS. 1, 12 to 17, in an implementation, the plug hole 1323a extends through the plug-in member 1323 parallel to the axial direction of the electric pump 100. The plug hole 1323a includes a first aperture 1323b and a second aperture 1323c. The first aperture 1323b is closer to the limiting member 1321 than the second aperture 1323c. The connection plate assembly 132 includes a pressure relief hole 1324. Along the direction parallel to the thickness of the limiting member 1321 (it should be noted that the thickness direction of the limiting member 1321 here is parallel to the axial direction of the electric pump 100), the pressure relief hole 1324 extends through the limiting member 1321. Along the axial direction of the electric pump 100, projecting the wall corresponding to the first aperture 1323b and the wall corresponding to the pressure relief hole 1324 onto the upper surface of the limiting member 1321, the projection of the corresponding wall of the pressure relief hole 1324 is located within the projection of the corresponding wall of the first aperture 1323b. The plug-in member 1323 is fixedly connected or connected to and limited by the limiting member 1321, and the first aperture 1323b is located above the limiting member 1321. During the first-time injection molding, the limiting member 1321 corresponding to the first aperture 1323b may deform under the injection pressure. In this way, a pressure relief hole 1324 is provided on the limiting member 1321 corresponding to the first aperture 1323b. During the first-time injection molding, at least part of the injection pressure is released through the pressure relief hole 1324. This helps to minimize deformation of the connection plate assembly 132 during the first-time injection molding, thereby reducing the risk of electrical connection failure in the electric pump 100.

In another implementation, referring to FIGS. 1, and 12 to 17, the plug hole 1323 passes through the plug-in member 1323 along the axial direction of the electric pump 100. The plug hole 1323 includes a first aperture 1323b and a second aperture 1323c, with the first aperture 1323b being closer to the limiting member 1321 than the second aperture 1323c. The plug-in member 1323 further includes a plate portion 1323d, with at least part of the plate portion 1323d located in the first aperture 1323b. The plate portion 1323d has at least one cutout portion 1323e, and at least part of the outer sidewall of the plate portion 1323d is formed by injection molding and fixed with the corresponding wall of the first aperture 1323b. By providing the plate portion 1323d, the strength of the plug-in member 1323 is improved, which helps to reduce deformation of the connection plate assembly 132 when it is used as an insert during injection molding, thereby mitigating the risk of electrical connection failure in the electric pump 100.

A method for manufacturing the electric pump 100 is provided according to the present application. Referring to FIGS. 1 to 17, the electric pump 100 includes a stator winding 131, a housing 134, and a pump shaft 133. The housing 134 includes a first housing 1341 and a second housing 1342. The first housing 1341 is formed by injection molding at least with the stator winding 131 being an insert. The injection-molded component combining the first housing 1341 and the stator winding 131 is defined as the first assembly 136. The second housing 1342 is then formed by injection molding with the first assembly 136 and the pump shaft 133 being inserts. Through this way, it allows the second housing 1342 to be fixed to the first assembly 136 through injection molding, which reduces the strength requirements for the second housing 1342 and connection with the first assembly 136 thereof. Consequently, this helps to lower the manufacturing costs of the second housing 1342 and connection with the first assembly 136 thereof, thereby contributing to a reduction in the overall manufacturing cost of the electric pump 100.

In an implementation, referring to FIGS. 1 to 17, the electric pump 100 further includes a connection plate assembly 132. The method for manufacturing the electric pump 100 includes the following steps: forming the connection plate assembly 132; assembling the connection plate assembly 132 to the end of the stator winding 131 and electrically connecting the connection plate assembly 132 to the stator winding 131; and forming the first housing 1341 by injection molding with the combined component of the connection plate assembly 132 and the stator winding 131 being an insert. The injection molding component combining the first housing 1341, the stator winding 131, and the connection plate assembly 132 is defined as the first assembly 136. This allows the connection plate assembly 132 to be pre-manufactured, facilitating the miniaturization of the molds for the electric pump 100 and thereby reducing manufacturing cost.

In an implementation, referring to FIGS.1 to 17, the connection plate assembly 132 includes a conductive member 1322 and a limiting member 1321, and the electric pump 100 includes a plug-in member 1323. The method for manufacturing the electric pump 100 includes the following step: forming the limiting member 1321 and the plug-in member 1323 by injection molding with the conductive member 1322 being an insert. This enables the limiting member 1321 and the plug-in member 1323 to be simultaneously injection-molded during the manufacturing of the connection plate assembly 132, simplifying the manufacturing process of the electric pump 100 and laying a foundation for reducing production cost. It should be noted that the conductive member 1322 includes a body portion 1322a and a pin portion 1322b, which are fixedly connected or connected with limitation. Specifically, the body portion 1322a and the pin portion 1322b may be an integral structural component or separate structural components that are fixedly connected through welding or achieve electrical connection through plugging.

In another implementation, referring to FIGS. 1 and 12 to 17, the connection plate assembly 132 includes a conductive member 1322, a limiting member 1321, and a plug-in member 1323. The method for manufacturing the electric pump 100 includes following steps: forming the plug-in member 1323. Specifically, with the body portion 1322a and the pin portion 1322b being separate structural components, plug-in member 1323 is formed by injection molding with the pin portion 1322b being an insert. The plug-in member 1323 is connected with and limited by the limiting member 1321. The pin portion 1322b includes an electrical connection portion 1322c, a base portion 1322d, and an external power supply connection portion 1322e. The electrical connection portion 1322c is connected with the body portion 1322a with limitation, the base portion 1322d is fixed with the plug-in member 1323 by injection molding, and the external power supply connection portion 1322e is used for connecting to an external power source, with at least part of it located within the plug hole 1323a. The plug-in member 1323 is assembled to the combined component of the conductive member 1322 and the limiting member 1321 that have been injection-molded together. This allows the plug-in member 1323 to be pre-manufactured, laying a foundation for further simplifying the structure of the injection mold for the connection plate assembly 132.

In an implementation, referring to FIGS. 1 to 17, the electric pump 100 further includes a rotating assembly 12, which includes a rotor assembly 122 and an impeller assembly 121. The electric pump 100 has a pump chamber 20. The method for manufacturing the electric pump 100 includes the following steps: forming the rotating assembly 12. The pump chamber 20 includes a rotor cavity 141 and an impeller cavity 15, which are interconnected. The pump chamber 20 allows for the circulation of working medium, and the rotating assembly 12 is positioned in the pump chamber 20. Specifically, at least part of the rotor assembly 122 is located in the rotor cavity 141, and the impeller assembly 121 is positioned in the impeller cavity 15.

In an implementation, referring to FIGS. 1 to 17, the electric pump 100 further includes a pump cover 11. The method for manufacturing the electric pump 100 includes the following steps: forming the pump cover 11. The pump cover 11 is an injection molding component, which is welded to the second housing 1342. This reduces the number of fixed structural components required for connecting the pump cover 11 to the stator assembly 13, as well as the number of sealing structural components at the connection point between the pump cover 11 and the stator assembly 13, thereby contributing to a reduction in the production cost of the electric pump 100.

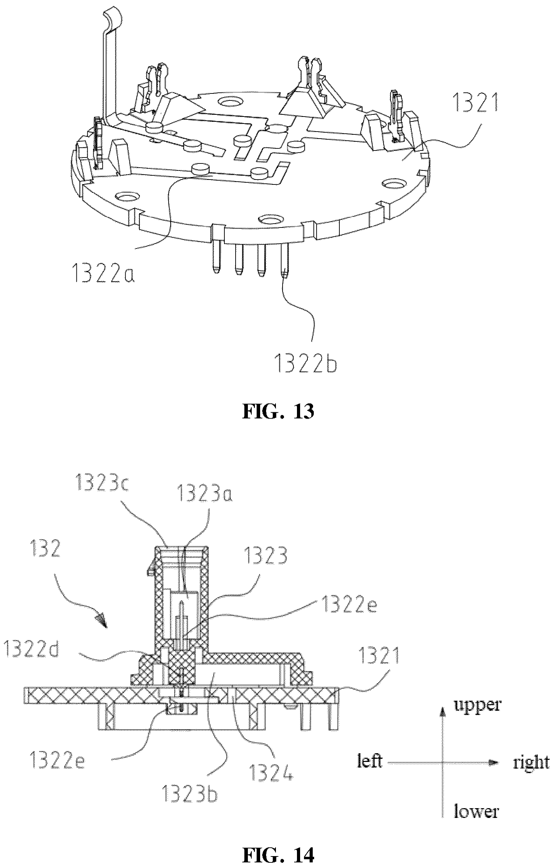

In an implementation, referring to FIGS. 1 to 19, the parting surface A for forming the first housing 1341 and the parting surface B for forming the second housing 1342 are coplanar. This allows the first assembly 136, which is formed with at least the stator winding 131 being an insert, to remain in part of the injection mold without being demolded for the next injection molding step. In the subsequent injection molding step, at least the first assembly 136 and the pump shaft 133 are used as inserts for injection molding. Since the first parting surface A and the second parting surface B are coplanar, the first assembly 136, formed with at least the stator winding 131 being an insert, can remain in part of the injection mold, reducing the positioning errors caused by repeated clamping of the first assembly 136 as an insert with the injection mold. This helps to improve the coaxial accuracy between the pump shaft 133 and the stator winding 131. For ease of description, referring to FIGS. 13 and 14, the injection mold is defined to include a first mold C. The mold used in the first-time injection molding is the first mold C. After the first-time injection molding is completed, part of the first mold C is detached, leaving the second assembly 136 within the first mold C. During the second-time injection molding, part of the first mold C and a second mold D are used in combination to complete the second injection molding. This ensures that when at least the pump shaft 133 is used as an insert in the second-time injection molding, the same positioning reference is used for positioning the stator core 1311 in both the first-time and second-time injection molding. This helps to reduce the positioning errors between the first assembly 136 and the second mold D, thereby improving the coaxiality between the pump shaft 133 and the stator core 1311.

It should be noted that, the above embodiments are only intended to illustrate the present application rather than to limit the technical solutions described in the present application. Although the present specification has been described in detail with reference to the embodiments as described above, it should be understood by those skilled in the art that modifications or equivalent substitutions may still be made by those skilled in the art to the technical solutions of the present application, and all technical solutions and improvements thereof that do not depart from the spirit and scope of the present application shall be included within the scope of the claims of the present application.

## Claims

1. An electric pump (100), comprising: a stator winding (131), a housing (134), and a pump shaft (133), wherein the housing (134) comprises a first housing (1341) and a second housing (1342), at least part of the first housing (1341) is formed by injection molding with the stator winding (131) being an insert, a first assembly (136) that comprises the first housing (1341) and the stator winding (131) is defined, at least part of the second housing (1342) is formed by injection molding with the first assembly (136) and the pump shaft (133) being inserts, the first housing (1341) comprises a first parting surface (A), and the second housing (1342) comprises a second parting surface (B), with the first parting surface (A) being coplanar with the second parting surface (B).

2. The electric pump (100) according to claim 1, further comprising a connection plate assembly (132), wherein along an axial direction of the electric pump (100), the connection plate assembly (132) is connected with the stator winding (131) with limitation or fixedly connected with the stator winding (131), the connection plate assembly (132) is electrically connected with the windings (1313) of the stator winding (131), and at least part of the first housing (1341) is formed by injection molding with the stator winding (131) and the connection plate assembly (132) being inserts.

3. The electric pump according to claim 1 or 2, wherein the first housing (1341) comprises a first main body portion (1341a) and a first edge portion (1341b), the first main body portion (1341a) is formed by injection molding with the stator winding (131) being an insert, the stator winding (131) comprises a stator core (1311), the stator core (1311) comprises a first end portion (1311a) and a second end portion (1311b), the first edge portion (1341b) is arranged at a radially outer side of the first main body portion (1341a), the first edge portion (1341b) is adjacent to the first end portion (1311a), and the first edge portion (1341b) is located between the first end portion (1311a) and the second end portion (1311b) along a direction parallel to the axial direction of the electric pump (100).

4. The electric pump according to claim 3, wherein the first edge portion (1341b) comprises a first end surface (1341c) and a second end surface (1341d), the first end surface (1341c) is closer to the first end portion (1311a) than the second end surface (1341d) along a direction parallel to the electric pump, and a plane where the first parting surface (A) or the second parting surface (B) is located is defined as a first reference plane (101), the first reference plane (101) is coplanar with a plane where the second end surface (1341d) is located;
alternatively, along the axial direction of the electric pump (100), the second end surface (1341d) is closer to the second end portion (1311b) than the first end surface (1341c), and a plane where the first parting surface (A) or the second parting surface (B) is located is defined as a first reference plane (101'), the first reference plane (101') is located between a plane where the second end surface (1341d) is located and a plane where the first end surface (1341c) is located, or the first reference plane (101') is coplanar with the plane where the first end surface (1341c) is located.

5. The electric pump according to any one of claims 1 to 4, wherein the first assembly (136) has a first cavity (1362), a corresponding wall of the first cavity (1362) comprises a bottom portion (1362a) and a side portion (1362b), the second housing (1342) comprises a rotor cavity bottom portion (1411) and a rotor cavity side portion (1412), the rotor cavity bottom portion (1411) and the rotor cavity side portion (1412) are connected in a hermetically sealing way by injection molding, the rotor cavity bottom portion (1411) is located on an upper side of the bottom portion (1362a) of the first cavity (1362), the rotor cavity bottom portion (1411) is in contact with the bottom portion (1362a) of the first cavity (1362), in a radial direction of the electric pump (100), the rotor cavity bottom portion (1411) covers the bottom portion (1362a) of the first cavity (1362), the rotor cavity side portion (1412) is located radially inward of the side portion (1362b) of the first cavity (1362), the rotor cavity side portion (1412) is in contact with the side portion (1362b) of the first cavity (1362), and along a circumferential direction of the side portion (1362b) of the first cavity (1362), the rotor cavity side portion (1412) covers the side portion (1362b) of the first cavity (1362).

6. The electric pump according to claim 5, wherein an inner side wall surface of the side portion (1362b) comprises an inner side wall surface of the stator core (1311) and an inner side wall surface of the first housing (1341).

7. The electric pump (100) according to claim 5 or 6, wherein the second housing (1342) further comprises a radially extending section (1342a), the radially extending section (1342a) is connected to one end of the rotor cavity side portion (1412) in a hermetically sealing way, along the axial direction of the electric pump, the radially extending section (1342a) is farther from the bottom portion (1362a) than the rotor cavity bottom portion (1411), the radially extending section (1342a) is fixed to the end portion of the first assembly (136) by injection molding, the electric pump (100) comprises an impeller cavity (15) and a rotor cavity (141), the rotor cavity (141) is in communication with the impeller cavity (15), a corresponding wall of the rotor cavity (141) comprises the rotor cavity bottom portion (1411) and the rotor cavity side portion (1412), and a corresponding wall of the impeller cavity (15) comprises at least part of the radially extending section (1342a).

8. The electric pump (100) according to any one of claims 5 to 7, wherein the pump shaft (133) comprises a fixed portion (1331) and a rotating portion (1332), the fixed portion (1331) is embedded in the rotor cavity bottom portion (1411), at least part of the rotating portion (1332) is located in the rotor cavity (141), and part of the rotor cavity bottom portion (1411) covers the end portion of the fixed portion (1331).

9. The electric pump according to any one of claims 1 to 8, wherein material of the first housing (1341) is different from that of the second housing (1342).

10. The electric pump according to claim 9, wherein hydrolysis resistance of the material of the first housing (1341) is weaker than that of polyphenylene sulfide material, and the hydrolysis resistance of the material of the second housing (1342) is stronger than or equal to that of polyphenylene sulfide material.

11. A manufacturing method for an electric pump (100), comprising:
forming a first housing (1341) by injection molding with at least the stator winding (131) being an insert, defining a first assembly (136), the first assembly (136) comprising the first housing (1341) and the stator winding (131); and
forming a second housing (1342) by injection molding with the first assembly (136) and the pump shaft (133) being inserts.

12. The manufacturing method for the electric pump (100) according to claim 11, wherein the electric pump (100) further comprises a connection plate assembly (132), and the manufacturing method for the electric pump (100) comprises:
forming the connection plate assembly (132);
assembling the connection plate assembly (132) with the stator winding (131) to electrically connect the connection plate assembly (132) with the stator winding (131); and
forming the first housing (1341) by injection molding with the connection plate assembly (132) and the stator winding (131) being inserts.

13. The manufacturing method for the electric pump according to claim 11 or 12, comprising:
allowing a parting surface for forming the first housing (1341) to be coplanar with a parting surface for forming the second housing (1342).

14. The manufacturing method for the electric pump (100) according to claim 13, comprising:
proceeding to a next injection molding step, without demolding the first assembly (136) formed by injection molding with at least the stator winding (131) being an insert, in which at least the first assembly (136) and the pump shaft (133) are used as inserts for injection molding.

15. The manufacturing method for the electric pump (100) according to any one of claims 11 to 14, wherein the injection molding material for forming the first housing (1341) is different from the injection molding material for forming the second housing (1342).
